# EUROPEAN PATENT APPLICATION

(11) **EP 4 782 273 A1**
(43) Date of publication of application: **29.07.2026**
(21) Application number: 25203491.3
(22) Date of filing: 19.09.2025
(51) Int. Cl.: B60N 2/68, B60N 2/70, B29C 45/17

(54) **SEAT AND METHOD OF MANUFACTURE USING ADVANCED INJECTION MOLDING METHODS**

(30) Priority: 27.01.2025 PT 2025120009
(71) Applicant: Simoldes Plásticos, SA, Oliveira de Azeméis, 3721-902 Santiago de Riba-UL (PT)
(72) Inventor: DUARTE DIAS, TONY FILIPE, 3721-902 OLIVEIRA DE AZEMEIS (PT); DE PINHO GOMES, NUNO FILIPE, 3721-902 OLIVEIRA DE AZEMEIS (PT); DA SILVA COSTA, MARIA TERESA, 3721-902 OLIVEIRA DE AZEMEIS (PT); PEREIRA MAGALHÃES, JOÃO, 4520-145 SANTA MARIA DA FEIRA (PT)
(74) Representative: Patentree

(57) **Abstract**

The present disclosure relates to a seat (1) for vehicles comprising a structural frame (2) obtainable by injection moulding; and a cushioning cover layer (3); wherein the structural frame comprises a plurality of hollow channels (4) obtainable by fluid injection moulding; and wherein the cushioning cover layer is tensioned across the structural frame for providing support and comfort to a user. Another aspect relates to an injection method for manufacturing a seat comprising: providing a mould, or set of moulds, configured for fluid injection moulding; heating the thermoplastic material to its molten state at a controlled temperature; injecting the molten thermoplastic material into a mould, or set of moulds, under high pressure to fill the mould cavity; injecting a work-fluid into the molten thermoplastic material, creating a plurality of hollow channels within the structural frame; cooling and demoulding the solidified structural frame from the mould, or set of moulds.

## Description

### TECHNICAL FIELD

The present invention relates to the field of seat assemblies and methods for their manufacture. More particularly, it pertains to an improved seat with enhanced performance and reduced environmental impact, achieved through the application of advanced injection moulding methods and design for maintenance and recycling. These methods optimize material usage and energy efficiency, contributing to sustainable production, usage and end of life management, particularly in the automotive industry.

### BACKGROUND

Seat assemblies, particularly those used in passenger cars, play a critical role in ensuring driver and passenger comfort, safety, and overall vehicle functionality. Current solutions predominantly rely on complex assemblies composed of numerous components made from a variety of materials, including metal alloys, polyurethane foams, thermoplastic polymers, textiles, and other composites. While these designs aim to optimize ergonomic comfort and safety, they present significant challenges related to environmental sustainability and end-of-life management. Most of the time this configuration jeopardises the circular economy at the end of product life.

One of the primary concerns with the conventional approach is the high environmental impact associated with the materials and manufacturing processes used. Metal components often undergo heat treatment processes and anti-corrosion coatings/treatments, surface plating, and chemical cleaning, which are resource-intensive and environmentally harmful due to the high energy consumption, use of hazardous chemicals, and generation of toxic waste byproducts. Similarly, the widespread use of polyurethane foam, which is challenging to recycle and emits volatile organic compounds (VOCs), contributes to growing environmental waste issues and impacts air quality. The combination of these materials, along with thermoplastic polymers and textiles, creates a complex seat assembly that is not only heavy but also difficult to disassemble and recycle, ultimately limiting the potential for circular economy practices in the automotive industry.

The environmental impact of traditional vehicle seat assemblies is further compounded by their inability to facilitate recycling at the end of the product's lifecycle. The integration of diverse materials into a single assembly often results in the need for labour-intensive separation processes, which are economically unviable and inefficient. As a result, a significant proportion of end-of-life vehicle seats are sent to landfills or incinerated, further exacerbating the environmental footprint of automotive manufacturing.

Additionally, the high weight of conventional seat assemblies contributes to increased fuel consumption of combustion vehicles, adversely impacting emissions and operating costs. The industry's ongoing shift toward electric vehicles places even greater emphasis on lightweight designs to maximize battery efficiency, making the reduction of seat weight a pressing concern.

Despite these challenges, consumer expectations for comfort, durability, and safety remain high. Efforts to address environmental considerations must not compromise these essential qualities. Moreover, there is a growing demand for designs that allow for the repair and replacement of individual seat components, reducing waste and extending the product's lifecycle. The increasing trend of Car sharing for urban mobility also challenges product design to facilitate easy repairs for such intensive usage scenarios.

Injection moulding is a well-established manufacturing process widely used in the automotive industry, among others, for producing components with complex shapes and precise dimensions. This technique involves injecting molten material, typically thermoplastics or other polymers, into a mould cavity under high pressure. Once the material cools and solidifies, the mould is opened, and the part is ejected. Injection moulding is valued for its ability to produce high volumes of consistent, intricate parts, for its quality with relatively low unit costs after initial tooling investment.

Document US11904746B2 discloses a seating frame for a vehicle seat, the frame comprising a back frame component for supporting a back rest, wherein the back frame component includes a plurality of interconnected reinforcing ribs that form a single unit, and wherein the seating frame is a one-piece injection-molded part made of plastic material. The invention also relates to a process of making such a seating frame. Furthermore, the invention relates to a vehicle seat comprising such a seating frame, and a vehicle comprising such a vehicle seat or such a seating frame.

Document US2020324673A1 discloses a seat back frame for a vehicle comprising: a frame body consisting of a thermoplastic fiber reinforced composite material; a reinforcing agent joined to the inside of the frame body; and a cover sheet joined to the outside of the frame body. According to the present invention, the frame is lightweight while maintaining rigidity and strength like a steel frame, and a cover sheet is joined thereto, thereby enabling a board which is further joined to the seat back frame to be omitted, which leads to the achievement of a slimmed and fabric-integrated seat back frame for a vehicle. Also, a cover sheet is joined to a body frame by using a vacuum adsorption scheme, which leads to the achievement of a method for manufacturing a seat back frame for a vehicle having improved joining force and increased merchantability.

Document US2021138944A1 discloses a seat frame assembly and a method of manufacturing the same whereby adhesion of a reinforcing material attached to a seat frame is improved to secure rigidity of the seat frame and process speed is improved. According to one embodiment disclosed herein, seat frame assembly includes: a frame configured such that a portion of each of opposite sides is bent forward, and supporting an upper body of an occupant; and side members joined to the opposite sides of the frame, respectively, each of the side members including a groove formed in a surface being in close contact with the frame, wherein a portion of the frame that is surface-joined to each of the side members is provided with a protrusion inserted into the groove.

Despite the high diversity of thermoplastic materials and compounds available, with a wide range of mechanical properties, these materials have mechanical limitations compared with other materials as metal alloys, particularly in applications requiring high stiffness. Overpassing such limitation may involve excess material usage and/or high dosage of reinforcement on compounded thermoplastic solutions, as carbon fibres, glass fibres or others, increasing the final product costs and weight. For large structural components like vehicle seats frames, but not only, these drawbacks are amplified, as traditional injection moulding may struggle to achieve the required structural integrity without adding unnecessary weight or complexity.

This invention aims to address the aforementioned challenges by introducing a novel seat and manufacturing process that significantly reduces environmental impact while maintaining, and even improving, the comfort, safety, and durability standards expected by the automotive industry.

These facts are hereby disclosed in order to illustrate the technical problem addressed by the present disclosure.

### GENERAL DESCRIPTION

The present disclosure relates to a seat, for vehicles, and method for its manufacture. More particularly, it pertains to an improved seat with enhanced performance and reduced environmental impact, achieved through the application of advanced injection moulding processes. These processes optimize material usage and energy efficiency, contributing to sustainable production, particularly in the automotive industry.

Unlike conventional approaches focusing only on the backrest frame or structural elements, the present disclosure provides a complete vehicle seat comprising both the structural frame and the cushioning cover layer, along with the corresponding integrated manufacturing method.

Fluid injection moulding, a variant of standard injection moulding, introduces a solution to some of these challenges. In this technique, a fluid - such as a gas or water - is injected into the molten material inside the mould. This creates cavities within the part, reducing material usage and overall weight without compromising structural integrity. Fluid injection moulding is particularly advantageous for producing large components where weight reduction is a priority, as it minimizes the product density while maintaining strength and stiffness.

Moreover, fluid injection moulding enables the production of parts with more complex geometries and integrated functionalities, as the cavities can also serve as conduits for wires, cables or heating/cooling systems for instance. In the context of vehicle seat assemblies, this could translate to lighter frames or internal supports that meet safety and durability requirements while reducing environmental impact, namely on production and usage. The reduced material consumption and material diversity further aligns with the automotive industry's sustainability goals by decreasing waste, decreasing carbon footprint and facilitating the use of recyclable materials, including those with recycled content.

The present disclosure is particularly beneficial in that it leverages efficient manufacturing processes and materials to reduce production and operational costs, thus addressing the shortcomings of existing techniques.

Furthermore, the use of sustainable methods, and lightweight and highly recyclable and recycled content materials, of the present disclosure, as the advantage of promoting waste reduction and supporting circular economy principles, minimizes carbon emissions in production and operation. Using fewer types of materials, and components, simplifies the manufacturing and assembly processes, reducing production complexity and costs. It also enhances recyclability at the end of the product's lifecycle, supporting sustainability and streamlining material recovery and reuse.

Unlike traditional reinforcement methods, the present disclosure provides a monolithic structure incorporating hollow tubular channels obtained, for example, via gas/water injection moulding. These hollow tubular channels serve both to reduce weight and enhance stiffness, without the need for additional overmoulding or thermoforming steps.

In contrast to prior art involving multiple manufacturing steps, like thermoforming or overmoulding, the present technology provides a one-shot injection moulding process capable of producing the complete structural frame with integrated features in a single moulding cycle.

Moreover, the simplified design allows for quick and straightforward maintenance without specialized tools, minimizing downtime and operation costs for users.

Another advantage of the present disclosure is that the disclosed seat is designed to be easier to clean, exhibits greater resistance to cleaning products, and demonstrates low flammability properties in line with automotive standards.

The advantages described in the present disclosure are not exhaustive. Other benefits, improvements, and features may be apparent to those skilled in the art upon reading this description, even if not explicitly listed herein.

An aspect of the present disclosure relates to a seat for vehicles, comprising:
a structural frame (2) obtainable by injection moulding; and
a cushioning cover layer (3);
wherein the structural frame comprises a plurality of hollow channels (4) obtainable by fluid injection moulding (i.e. for providing enhanced rigidity while reducing weight); and
wherein the cushioning cover layer is tensioned across the structural frame for providing support to a user (i.e. for providing uniform support and comfort to a user).

In an embodiment, the structural frame is formed by a single part or by a plurality of parts.

In an embodiment, the seat is devoid of foam materials, including but not limited to polyurethane.

In an embodiment, the structural frame comprises a backrest portion (5) and a lower seating portion (6), and the hollow channels are located in the backrest portion and/or in the lower seating portion.

In a further embodiment, the backrest portion is configured in a Y-shape and comprises at least two arms (8).

In a further embodiment, the at least two arms (8) extend upwardly and outwardly from a lower sub portion (5.1) of the backrest portion to an upper sub portion (5.2) of the backrest portion.

In a further embodiment the seat further comprises a peripheral border (7), wherein the at least two arms (8) are connected to the peripheral border.

In an embodiment, the backrest portion is concave for supporting a back of the user.

In an embodiment, the cushioning cover layer is fastened to the structural frame using mechanical fastening mechanisms, such as hooks, clips, grooves, screws, anchoring profiles, or snap-fit connectors, configured to maintain uniform tension across the cover-cushion layer and prevent slippage during use.

In an embodiment, the material of the cushioning cover layer is selected from a list consisting of: fabric (textile, woven textile, non-woven textile), polymer, composite, leather (natural or synthetic), or a combination thereof; preferably wherein any of these materials are biomaterial and/or a recycled content material and recyclable.

In a further embodiment, the thermoplastic material of the structural frame is selected from a list of polymers groups consisting of: polyethylene group (PE), polypropylene group (PP), polyethylene terephthalate group (PET), Polybutylene terephthalate group (PBT), polycarbonate group (PC), Acrylonitrile Butadiene Styrene group (ABS), acrylonitrile styrene acrylate (ASA), styrene acrylonitrile (SAN), polyarylamide group (PARA), polyamide group (PA), Polymethyl methacrylate group (PMMA), Polyacetal group (POM), Polytetrafluoroethylene (PTFE) or mixtures thereof, preferably wherein the thermoplastic material is a bio-thermoplastic, recycled content-thermoplastic and/or a recyclable thermoplastic; preferably wherein the polymer is reinforced with short polymer fibres. Alternatively, the polymer can also be reinforced by long glass fibers, optionally combined with mineral fillers or recycled content to enhance mechanical properties and sustainability. The use of continuous fibers, like UD tapes or organosheets, is also contemplated in overmoulded reinforcement regions.

Along this description, it is considered that a short polymer fibre is a polymer fibre with typically less than 1 mm long. Along this description, it is considered that a long polymer fibre is a polymer fibre with typically more than 1 mm long.

In an embodiment the thermoplastic material of the structural frame is compounded with powders, in particular, mineral powder; and/or fibres.

In an embodiment the thermoplastic material of the structural frame is mechanically reinforced using endless fibres overmoulded, such as unidirectional tapes (UDtapes) and/or Organosheets, for improving mechanical performance and dimensional stability.

In a further embodiment, the present disclosure relates to a seat assembly further comprising a headrest (10), integrally formed as part of the structural frame, or wherein the headrest is a separate component mounted onto the structural frame.

In an embodiment the hollow channels are configured to serve as conduits for wires, cables, or cooling/heating systems.

Another aspect of the present disclosure relates to an injection method for manufacturing a seat comprising the steps of:
providing a mould, or set of moulds, configured for fluid injection moulding;
heating the thermoplastic material to its molten state at a controlled temperature;
injecting the molten thermoplastic material into the mould, or set of moulds, under high pressure to fill the mould cavity;
injecting a work-fluid into the molten thermoplastic, creating a plurality of hollow channels within the structural frame;
cooling and demoulding the solidified structural frame from the mould, or set of moulds.

In an embodiment, the injection method further comprises tensioning the cushioning cover layer across the structural frame.

In an embodiment the cushioning cover layer is supported by the frame, not requiring high tensioning, depending of seat final usage and requirements.

In an embodiment, the mould, or set of moulds, has variable thickness regions to guide the flow of molten thermoplastic and injected fluid for precise hollow channel formation.

In an embodiment, the fluid injected into the molten thermoplastic material is selected from a gas, such as nitrogen or carbon dioxide, or a liquid, such as water, or a gas-liquid mixture.

In an embodiment, the thermoplastic material is heated to a temperature above the melting temperature (TM) or glass transition temperature (Tg).

A further aspect of the present disclosure relates to a mould, or set of moulds, for manufacturing a seat.

A further aspect of the present disclosure relates to the use of the seat as an office chair in domestic, commercial, industrial, or residential applications.

A further aspect of the present disclosure relates to a vehicle comprising the seat.

### BRIEF DESCRIPTION OF THE DRAWINGS

The following figures provide preferred embodiments for illustrating the disclosure and should not be seen as limiting the scope of invention.
**Figure 1****:** Isometric exploded front view of an embodiment of a seat according to the present disclosure.
**Figure 2****:** Isometric front view of an embodiment of a seat according to the present disclosure.
**Figure 3****:** Isometric rear view of an embodiment of a seat according to the present disclosure.
**Figure 4****:** Front view of an embodiment of a seat according to the present disclosure.
**Figure 5****:** Rear view of an embodiment of a seat according to the present disclosure.
**Figure 6****:** illustrates the setup and results of experimental simulation tests conducted to simulate the mould flow dynamics of the disclosed seat, in an embodiment.
**Figure 7****:** depicts the setup and results of experimental simulation tests analysing the mechanical behaviour of the seat structure, in an embodiment.
**Figure 8****:** Isometric front view illustrating: (a) potential locations of hollow channels within the seat, in an embodiment of the present disclosure; (b) a cross-sectional view showing hollow channels in a lower seating portion; and (c) and (d) cross-sectional views depicting hollow channels in a backrest portion.
**Figure 9****:** Comparative schematic representation of closed-section (square) and open-section (U-profile) beams under flexural and torsional loads, illustrating the structural benefits of closed tubular sections in terms of stiffness and material efficiency.
**Figure 10****:** Perspective views of the seat structural frame (1) illustrating the integration of hollow channels (2) formed via fluid injection moulding for enhanced rigidity, reduced weight, and structural efficiency.

Throughout the figures indicated above, the following elements are indicated with the respective references:
1 - seat;
2 - structural frame;
3 - cushioning cover layer;
4 - plurality of hollow channels;
5 - backrest portion;
5.1 - upper sub-portion;
5.2 - backrest lower sub-portion;
6 - lower seating portion;
7 - peripheral border;
8 - at least two arms;
10 - headrest.

### DETAILED DESCRIPTION

The present disclosure relates to a seat for vehicles comprising a structural frame obtainable by injection moulding; and a cushioning cover layer; wherein the structural frame comprises a plurality of hollow channels obtainable by fluid injection moulding; and wherein the cushioning cover layer is tensioned across the structural frame for providing support and comfort to a user. Another aspect relates to an injection method for manufacturing a seat comprising: providing a mould, or set of moulds, configured for fluid injection moulding; heating the thermoplastic material to its molten state at a controlled temperature; injecting the molten thermoplastic material into the mould, or set of moulds, under high pressure to fill the mould cavity; injecting a work-fluid into the molten thermoplastic material, creating a plurality of hollow channels within the structural frame; cooling and demoulding the solidified structural frame from the mould, or set of moulds.

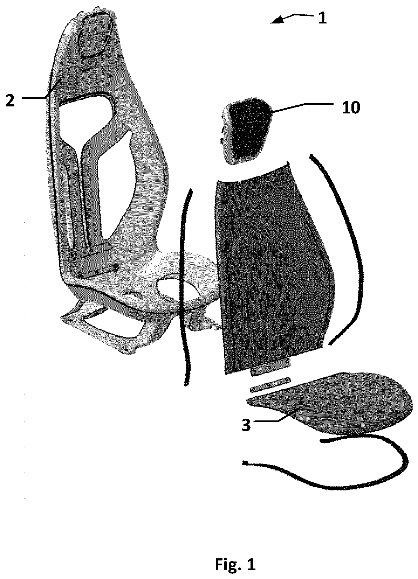

Figure 1 shows an isometric exploded front view representation of an embodiment of a seat according to the present disclosure.

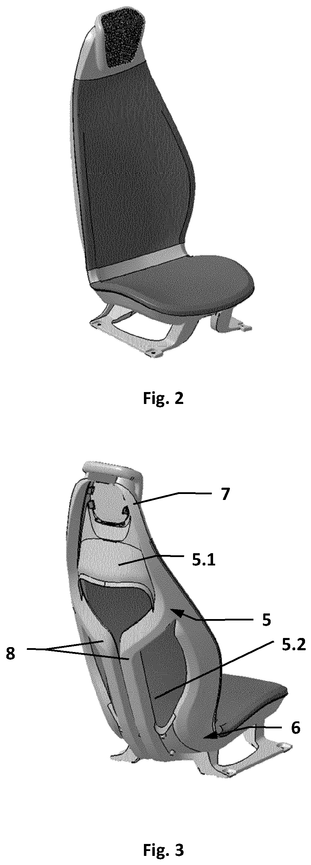

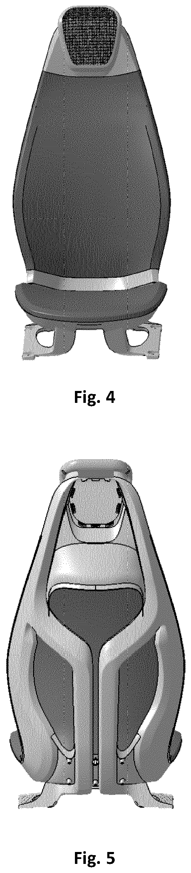

Figures 3 and 5, show a rear view of a seat in an embodiment according to the present disclosure.

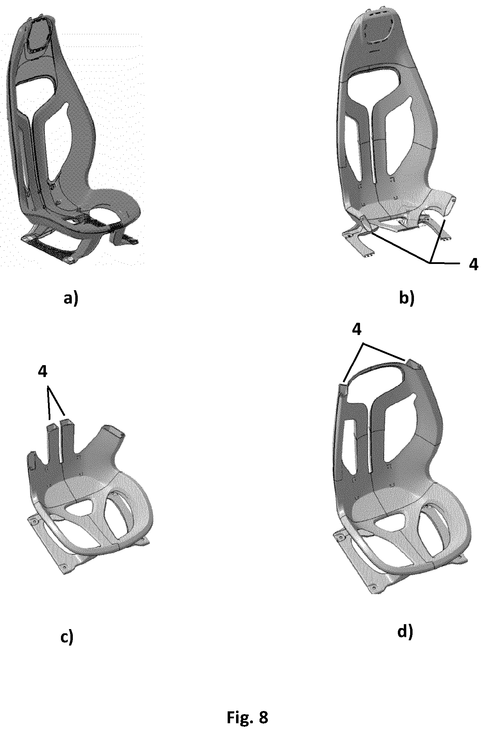

Figure 8 provides an isometric front view of the seating structure according to a preferred embodiment.

The present disclosure relates to a seat (1) for vehicles, as illustrated in Figures 1 to 8. The seat (1) includes a structural frame (2) and a cushioning cover layer (3), which together provide a lightweight, rigid, and comfortable seating solution.

The structural frame (2) is a pivotal component of the seat, designed to combine durability, lightweight construction, and enhanced safety. In an embodiment it can be as single piece, in another embodiment it may comprise subassemblies, in both embodiments the seat is manufactured mainly from a thermoplastic material using a fluid injection moulding method. This advanced manufacturing process allows for the precise formation of complex geometries, enabling the integration of innovative structural features while optimizing material usage.

A key feature of the structural frame (2) is the incorporation of a plurality of hollow channels (4), strategically distributed throughout its design. In an embodiment, the plurality of hollow channels is strategically located within the backrest portion (5) and/or the lower seating portion (6). These hollow channels provide enhanced rigidity and structural integrity while significantly reducing the overall weight of the structural frame. By employing reinforcement through geometry, the channels act as built-in braces, effectively strengthening the frame against bending, torsion, and other deformations. The design also eliminates excess material in low-stress regions, further minimizing weight without compromising performance.

Unlike traditional reinforcement methods, the present disclosure provides a monolithic structure incorporating hollow tubular channels obtained, for example, via gas/water injection moulding. These hollow tubular channels serve both to reduce weight and enhance stiffness, without the need for additional overmoulding or thermoforming steps.

Figure 8 provides an isometric front view of the seating structure according to a preferred embodiment, highlighting various aspects of the hollow channels (4) formed by fluid injection. In part (a), the figure illustrates potential locations of the hollow channels within the seat. Part (b) presents a cross-sectional view showing hollow channels in the lower seating portion, created through the fluid injection process. Parts (c) and (d) further depict cross-sectional views of the hollow channels formed in the backrest portion, demonstrating their configuration and distribution as a result of the fluid injection technique.

In one possible embodiment of the present disclosure the backrest portion (5) of the seat (1) is configured in a Y-shaped configuration, which includes at least two arms (8) extending upwardly and outwardly from a lower sub-portion (5.1) of the backrest to an upper sub-portion (5.2) of the backrest. These arms provide a stable and balanced structure, suitable for supporting the user's back. However, the design is not limited to the Y-shape. The inclusion of at least two arms allows for a variety of configurations, offering enhanced flexibility to address diverse design requirements, whether focused on structural stability, ergonomic support, aesthetic appeal, or a combination thereof, but not limited to these. Embodiments featuring a single central arm are also contemplated

In said possible embodiment, the at least two arms (8) are connected to a peripheral border (7). This connection provides additional reinforcement, ensuring that the backrest remains robust even under stress or frequent use.

Moreover, the backrest portion (5) is concave, an ergonomic feature designed to conform to the natural curvature of the user's back. This concave shape ensures improved comfort during use while maintaining compatibility with the configurations of the arms (8) and peripheral border (7). The combination of these elements highlights the backrest's innovative and adaptable design, capable of addressing varying structural and comfort needs, making it suitable for a wide range of applications.

Beyond structural reinforcement, the aforementioned hollow channels (4) contribute to safety and durability. In the event of an impact, these channels help absorb and dissipate energy more effectively than a solid structure, enhancing the frame's ability to protect occupants during a collision. Moreover, the channels are precisely positioned to ensure even distribution of mechanical loads, reducing stress concentrations that could lead to material failure. In a preferred embodiment, the hollow channels are particularly located in a backrest portion and in a lower seating portion of the structural frame for providing reinforcement against the forces applied during leaning, for enhancing support and for distributing the weight of the occupant evenly. This thoughtful design ensures the frame can withstand the forces and vibrations encountered during vehicle operation, maintaining reliability and safety throughout its lifespan.

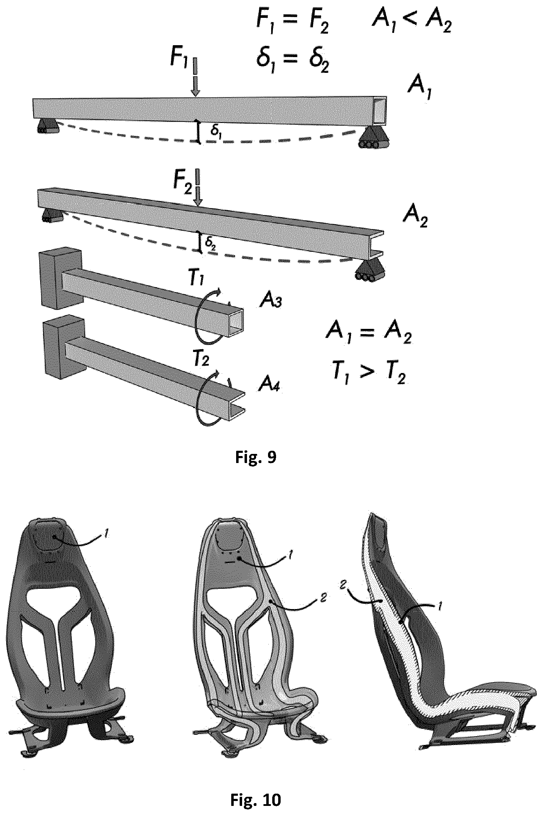

Figure 9 illustrates the mechanical advantage of employing closed-section, or tubular, geometries in structural components, such as those implemented in the disclosed seat frame. The top part of the figure shows two beams subjected to equal vertical loads (F₁ = F₂) resulting in equal deflections (δ₁ = δ₂). However, the open-section beam (A₂) requires a significantly larger cross-sectional area to match the flexural stiffness of the closed-section beam (A₁), leading to an estimated 17% increase in material use and corresponding weight. In the lower part of figure 9, the same comparison is made for torsional loads. When subjected to the same cross-sectional area (A₃ = A₄), the closed-section beam (A₃) exhibits a much higher resistance to torsional deformation (T₁ > T₂), supporting up to 10 times the torque of its open-section counterpart. These comparisons clearly demonstrate that hollow tubular structures not only reduce material consumption for equivalent flexural stiffness, but also drastically improve torsional resistance, which is particularly beneficial in automotive seating applications where both weight and rigidity are critical.

Figure 10 presents three perspective views of the seat structure (1), highlighting the incorporation of hollow channels (2) achieved through fluid injection moulding. These channels are integrated within the geometry of the frame to optimize stiffness and mechanical performance while minimizing material usage and overall weight. The hollow channels follow the primary load paths in the backrest and seat pan, acting as reinforcement elements that mimic tubular structures, thereby improving the rigidity-to-weight ratio. The fluid injection technique enables the formation of these internal cavities with precision, avoiding additional steps such as overmoulding or mechanical assembly. This design not only supports sustainability goals but also ensures high structural integrity, ergonomic comfort, and simplified production in a single moulding operation.

The cushioning cover layer (3) is tensioned across the structural frame (2). The cushioning cover layer serves multiple purposes, including providing uniform support and ensuring comfort for the user. The tensioned configuration of the cushioning cover layer allows it to evenly distribute the user's weight across the frame, thereby eliminating pressure points and enhancing overall comfort. This layer serves both as the cushioning and the exterior cover of the seat, combining functionality, comfort, and aesthetics in a single component.

In another embodiment, the cushioning cover layer (3) can be supported by the structural frame (2) without requiring great tensioning. This configuration allows for changing the tensioning level based on the seat's intended usage and specific requirements. By adjusting the tensioning, the cover-cushion layer can be tailored to suit different applications, offering enhanced design flexibility while still maintaining functionality and user comfort. This alternative approach ensures the seat can adapt to a variety of scenarios and design needs.

In an embodiment, the layer is detachably fastened to the structural frame (2), facilitating easy repair, replacement, or recycling. This design not only enhances the sustainability of the seat but also simplifies maintenance and prolongs its lifecycle, offering a practical and environmentally friendly solution.

In an embodiment the backrest portion is concave for supporting a back of the user.

In an embodiment the seat further comprises a headrest (10) integrally forming part of the structure frame for creating a single-piece design enhancing structural integrity and manufacturing simplicity.

In another embodiment the headrest is a separate soft component, such as a fully recyclable thermoplastic, in particular thermoplastic elastomers (TPE), mounted onto the structural frame allowing easy replacement and facilitating repair and recycling.

In an aspect of the present invention, the method of manufacturing a seat comprises the step of injecting a fluid into the molten thermoplastic material.

In one embodiment, the fluid injected into the molten thermoplastic material is a gas, such as nitrogen or carbon dioxide, chosen for its ability to create precise and uniform hollow channels while preserving the structural integrity of the material.

In another embodiment, the fluid is a liquid, such as water, which not only aids in forming hollow channels but also accelerates cooling during the moulding process, reducing cycle times.

Alternatively, in a further embodiment, a gas-liquid mixture is used, combining the advantages of gas precision, longer veins, and liquid cooling allowing bigger sections, providing a versatile solution for various manufacturing requirements.

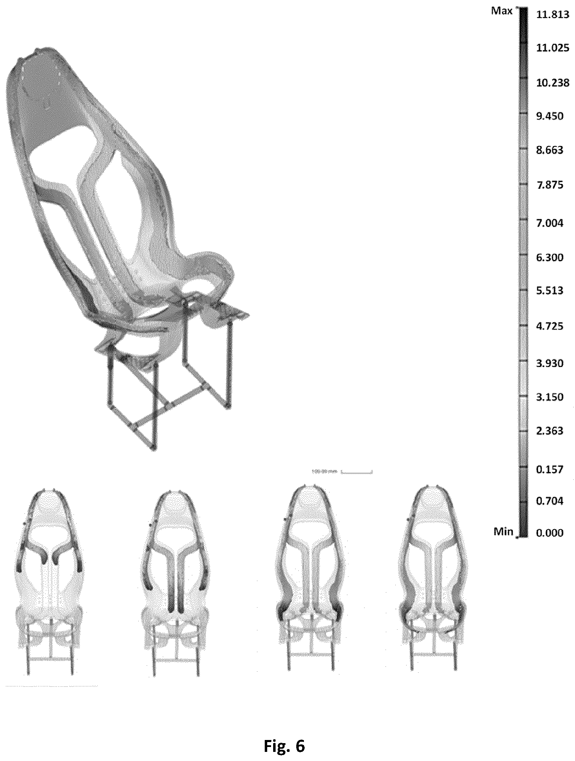

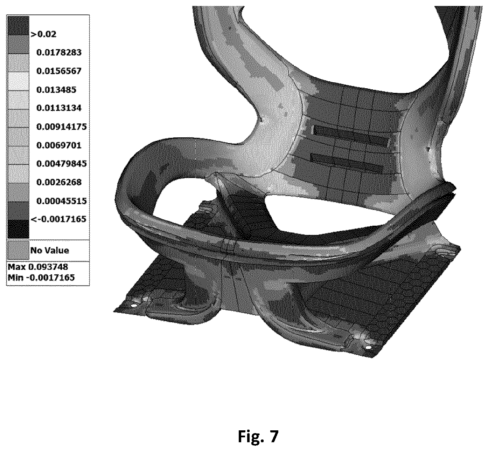

Figure 6 illustrates the design-for-manufacturing studies conducted using computer-aided engineering (CAE) tools to simulate mould flow dynamics during the seat manufacturing process. Advanced software, such as Moldex3D^{™}, was employed to model the flow behaviour of thermoplastic material during injection moulding, as well as the formation of hollow channels through fluid injection. Specifically, the figure highlights simulations using water as the Filling/Packing melt front time (in seconds) during the fluid injection method step, but other simulations such as melt Injection pressure and fluid pressure, fibres orientation and welding lines studies were also done to improve process conditions and design. Figure 7 showcases the application of CAE methodologies, leveraging finite element analysis (FEA) software to predict the mechanical performance of the seat under load such as the Plastic Strain (in mm/mm), on the figure, but other simulations were also carried to identify critical stress areas and maximum deformation under load.

Moldex3D^{™} is a trademark of CoreTech System Co., Ltd.

While Moldex3D was utilized for the simulation in the examples described herein, other equivalent software or analytical methods may also be employed to achieve similar results.

### Experimental Data

The following examples and experimental data illustrate the performance and advantages of the disclosed seat.

### Example 1: Mechanical Testing

### a. Complete seat

| **Test designation** | **Standard/Test conditions** | **Results** |
|---|---|---|
| Endurance of sitting in and getting out of the seat to simulate intensive usage | The load is applied vertically using an impactor, in the seat | No rupture in the fabric nor frame During and after the test: |
| | A cycle is defined by: | * No aspect deterioration |
| | - a load in the seat | * Seat operation without abnormal noises. |
| | - 75 000 cycles | |
| Resistance to knee strike | Misused simulation: Application of a load of 80 daN through a punch simulating the knee, applied to the center of the seat during 1 minute | No change of appearance (whitening, color change, etc.) and no rupture in the fabric nor frame during and after the test |
| Assembly/disassembly effort at 23°C (fixation by fixation) | Headrest assembling/disassembling 5 times measuring disassembling efforts | Disassembling efforts variation ≤ 20% |
| | Cushioning retainer assembling/disassembling 5 times measuring disassembling efforts | Disassembling efforts variation ≤ 20% |
| | Cushioning/Backrest fixations assembling/disassembling 5 times applying 1.5 Nm torque on screwing | Assure correct assembling with defined torque in all cycles |

### Example 2: Ageing and durability testing

### b. Cushioning and backrest fabric and structural frame

| **Test designation** | **Standard/Test conditions** | **Results** |
|---|---|---|
| Environmental ageing resistance | Test with cycles: 40°C and 95% RH; -20°C and 90°C | After exposure and return to ambient temperature, without damage on product |

### Example 3: Environmental Cabin air quality

### c. Cushioning and backrest fabric and structural frame (raw materials)

| **Test designation** | **Standard/Test conditions** | **Results** |
|---|---|---|
| Odor test | VDA 270 | ≤3.5 |
| | Variant B3 | |
| COV's | VDA 277 | ≤ 30 µgC/g |
| Fogging (Condensable constituents) | DIN 75201 | The fogging index ≥75% |
| | Method A | |

### Example 4: Cleaning resistance tests

### d. Cushioning and backrest fabric

| **Test designation** | **Standard/Test conditions** | **Results** |
|---|---|---|
| Resistance to cleaning agents (staining) | The surface must resist to cleaning agents; The surface condition and rubbing cloth must be evaluated after crockmeter strokes | Without changes in colour and surface fabric structure |
| | | Staining of the rubbing cloth according to grayscale fastness grade ≥ 4 as per DIN EN ISO 105-A03 |

### Example 5: Regulation characteristics

### e. Cushioning and backrest fabric and structural frame

| **Test designation** | **Standard/Test conditions** | **Results** |
|---|---|---|
| Comply with the absence of heavy metals in accordance with directive 2000/53/CE | Directive 2000/53/CE | Absence of any forbidden material according to standard |
| Flammability | ISO 3795 at initial state | Horizontal rate of combustion: ≤ 100 mm/min |

The term "comprising" whenever used in this document is intended to indicate the presence of stated features, integers, steps, components, but not to preclude the presence or addition of one or more other features, integers, steps, components or groups thereof.

The disclosure should not be seen in any way restricted to the embodiments described and a person with ordinary skill in the art will foresee many possibilities to modifications thereof. The above-described embodiments are combinable.

The following dependent claims further set out particular embodiments of the disclosure.

## Claims

1. A seat (1) for vehicles, comprising:
a structural frame (2) obtainable by injection moulding; and
wherein the structural frame comprises a plurality of hollow channels (4) obtainable by fluid injection moulding; and
wherein the structural frame is formed by a single part or by a plurality of parts.

2. The seat according to the previous claim, further comprising a cushioning cover layer (3), wherein the cushioning cover layer (3) is tensioned across the structural frame for providing support to a user, preferably wherein the cushioning cover layer (3) is fastened to the structural frame using mechanical fastening mechanisms, in particular hooks, clips, grooves, screws, anchoring profiles, or snap-fit connectors, configured to maintain uniform tension across the cover-cushion layer and prevent slippage during use.

3. The seat according to any of the previous claims, wherein the structural frame comprises a backrest portion (5) and a lower seating portion (6), and the hollow channels are located in the backrest portion and/or in the lower seating portion, preferably wherein the backrest portion is concave for supporting a back of the user, more preferably wherein the backrest portion is configured in a Y-shape and comprises at least two arms (8), wherein the at least two arms (8) extend upwardly and outwardly from a lower sub portion (5.1) of the backrest portion to an upper sub portion (5.2) of the backrest portion.

4. The seat according to the previous claim 3, further comprising a peripheral border (7), wherein the at least two arms (8) are connected to the peripheral border.

5. The seat according to any of the previous claims, wherein the cushioning cover is devoid of polyurethane foam, in particular the cushioning layer is devoid of foam materials, preferably wherein the material of the cushioning cover layer is selected from a list consisting of: fabric, polymer, composite, leather, or a combination thereof.

6. The seat according to any of the previous claims, wherein the thermoplastic material of the structural frame is selected from a list consisting of polymers groups such as: polyethylene group (PE), polypropylene group (PP), polyethylene terephthalate group (PET), Polybutylene terephthalate group (PBT), polycarbonate group (PC), Acrylonitrile Butadiene Styrene group (ABS), acrylonitrile styrene acrylate (ASA), styrene acrylonitrile (SAN), polyarylamide group (PARA), polyamide group (PA), Polymethyl methacrylate group (PMMA), Polyacetal group (POM), Polytetrafluoroethylene (PTFE) or mixtures thereof; preferably wherein the thermoplastic material is a bio-thermoplastic, recycled content-thermoplastic and/or a recyclable- thermoplastic, in particular wherein the thermoplastic material of the structural frame is compounded with powders, in particular, mineral powder; and/or fibres, preferably wherein the structural frame is mechanically reinforced using endless fibres overmoulded, such as unidirectional tapes and/or Organosheets, for improving mechanical performance and dimensional stability.

7. A seat assembly comprising the seat of any of the previous claims, further comprising a headrest (10), integrally formed as part of the structural frame, or wherein the headrest is a separate component mounted onto the structural frame.

8. An injection method for manufacturing a seat according to any of the claims 1-7, comprising the steps of:
providing a mould, or set of moulds, configured for fluid injection moulding;
heating the thermoplastic material to its molten state at a controlled temperature;
injecting the molten thermoplastic material into the mould, or set of moulds, under high pressure to fill the mould cavity;
injecting a work-fluid into the molten thermoplastic material, creating a plurality of hollow channels within the structural frame;
cooling and demoulding the solidified structural frame from the mould, or set of moulds.

9. The method according to the previous claim, further comprising tensioning the cushioning cover layer across the structural frame.

10. The method according to any of the previous claims 8 to 9, wherein the mould, or set of moulds, has variable thickness regions to guide the flow of molten thermoplastic and injected fluid for precise hollow channel formation.

11. The method according to any of the previous claims 8 to 10, wherein the fluid injected into the molten thermoplastic material is selected from a gas, such as nitrogen or carbon dioxide, a liquid, such as water, or a gas-liquid mixture.

12. The method according to any of the previous claims 8 to 11, wherein the thermoplastic material is heated to a temperature above the melting temperature (TM) or glass transition temperature (Tg).

13. Mould, or set of moulds, for manufacturing a seat according to any of the claims 1-6.

14. Use of the seat according to any of the claims 1-6 as an office chair in domestic, commercial, industrial, or residential applications.

15. Vehicle comprising the seat according any of the claims 1-6.

## Amended claims

### Amended claims in accordance with Rule 137(2) EPC.

1. A seat (1) for vehicles, comprising:
a structural frame (2) obtainable by injection moulding; and
wherein the structural frame comprises a plurality of hollow channels (4) obtainable by fluid injection moulding; and
wherein the structural frame is formed by a single part or by a plurality of parts;
wherein the structural frame comprises a backrest portion (5) and a lower seating portion (6), and the hollow channels are located in the backrest portion and/or in the lower seating portion; and
further comprising a peripheral border (7), wherein the at least two arms (8) are connected to the peripheral border.

2. The seat according to the previous claim, further comprising a cushioning cover layer (3), wherein the cushioning cover layer (3) is tensioned across the structural frame for providing support to a user, preferably wherein the cushioning cover layer (3) is fastened to the structural frame using mechanical fastening mechanisms, in particular hooks, clips, grooves, screws, anchoring profiles, or snap-fit connectors, configured to maintain uniform tension across the cover-cushion layer and prevent slippage during use.

3. The seat according to any of the previous claims, wherein the backrest portion is concave for supporting a back of the user, preferably wherein the backrest portion is configured in a Y-shape and comprises at least two arms (8), wherein the at least two arms (8) extend upwardly and outwardly from a lower sub portion (5.1) of the backrest portion to an upper sub portion (5.2) of the backrest portion.

4. The seat according to any of the previous claims, wherein the cushioning cover is devoid of polyurethane foam, in particular the cushioning layer is devoid of foam materials, preferably wherein the material of the cushioning cover layer is selected from a list consisting of: fabric, polymer, composite, leather, or a combination thereof.

5. The seat according to any of the previous claims, wherein the thermoplastic material of the structural frame is selected from a list consisting of polymers groups such as: polyethylene group (PE), polypropylene group (PP), polyethylene terephthalate group (PET), Polybutylene terephthalate group (PBT), polycarbonate group (PC), Acrylonitrile Butadiene Styrene group (ABS), acrylonitrile styrene acrylate (ASA), styrene acrylonitrile (SAN), polyarylamide group (PARA), polyamide group (PA), Polymethyl methacrylate group (PMMA), Polyacetal group (POM), Polytetrafluoroethylene (PTFE) or mixtures thereof; preferably wherein the thermoplastic material is a bio-thermoplastic, recycled content-thermoplastic and/or a recyclable- thermoplastic, in particular wherein the thermoplastic material of the structural frame is compounded with powders, in particular, mineral powder; and/or fibres, preferably wherein the structural frame is mechanically reinforced using endless fibres overmoulded, such as unidirectional tapes and/or Organosheets, for improving mechanical performance and dimensional stability.

6. A seat assembly comprising the seat of any of the previous claims, further comprising a headrest (10), integrally formed as part of the structural frame, or wherein the headrest is a separate component mounted onto the structural frame.

7. An injection method for manufacturing a seat according to any of the claims 1-6, comprising the steps of:
providing a mould, or set of moulds, configured for fluid injection moulding;
heating the thermoplastic material to its molten state at a controlled temperature;
injecting the molten thermoplastic material into the mould, or set of moulds, under high pressure to fill the mould cavity;
injecting a work-fluid into the molten thermoplastic material, creating a plurality of hollow channels within the structural frame;
cooling and demoulding the solidified structural frame from the mould, or set of moulds.

8. The method according to the previous claim, further comprising tensioning the cushioning cover layer across the structural frame.

9. The method according to any of the previous claims 7 to 8, wherein the mould, or set of moulds, has variable thickness regions to guide the flow of molten thermoplastic and injected fluid for precise hollow channel formation.

10. The method according to any of the previous claims 7 to 9, wherein the fluid injected into the molten thermoplastic material is selected from a gas, such as nitrogen or carbon dioxide, a liquid, such as water, or a gas-liquid mixture.

11. The method according to any of the previous claims 7 to 10, wherein the thermoplastic material is heated to a temperature above the melting temperature (TM) or glass transition temperature (Tg).

12. Mould, or set of moulds, for manufacturing a seat according to any of the claims 1-5.

13. Use of the seat according to any of the claims 1-5 as an office chair in domestic, commercial, industrial, or residential applications.

14. Vehicle comprising the seat according any of the claims 1-5.
